# EUROPÄISCHE PATENTSCHRIFT

(11) **EP 3 078 549 B1**
(45) Veröffentlichungstag und Bekanntmachung des Hinweises auf die Patenterteilung: **20.06.2018**
(21) Anmeldenummer: 16155141.1
(22) Anmeldetag: 11.02.2016
(51) Int. Cl.: B60R 16/03, F02N 11/14

(54) **LANDWIRTSCHAFTLICHE ARBEITSMASCHINE**
AGRICULTURAL WORK MACHINE
MACHINE AGRICOLE

(30) Priorität: 09.04.2015 DE 102015105360
(43) Veröffentlichungstag der Anmeldung: 12.10.2016
(73) Patentinhaber: CLAAS Tractor S.A.S., 78141 Vélizy-Villacoublay Cedex (FR)
(72) Erfinder: Esserméant, Cédric, 78500 Sartouville (FR); Desbois, Frédéric, 78570 Andrésy (FR)
(74) Vertreter: Budach, Steffen

(56) Entgegenhaltungen:
- WO-A1-2006/130071
- AT-U1- 223
- DE-A1- 3 110 365
- US-A- 4 079 304
- US-A- 4 700 961
- US-A1- 2005 070 155
- US-A1- 2010 188 040

## Beschreibung

Die Erfindung betrifft eine landwirtschaftliche Arbeitsmaschine gemäß dem Oberbegriff des Anspruchs 1.

Landwirtschaftliche Arbeitsmaschinen, beispielsweise in Form eines Traktors oder einer selbstfahrenden Erntemaschine, weisen üblicherweise einen Antriebsmotor in Form einer Verbrennungskraftmaschine auf, welcher eine Antriebsleistung und Leistung zum Betrieb der Aggregate und elektrischer Verbraucher der landwirtschaftlichen Arbeitsmaschine generiert. Eine Versorgung elektrischer Verbraucher kann dabei über ein elektrisches Bordnetz erfolgen, welches normalerweise mindestens einen elektrischen Energiespeicher wie eine Batterie zur abrufbaren Speicherung elektrischer Energie aufweist.

Mittels eines Starters kann der Antriebsmotor elektrisch gestartet werden, wobei üblicherweise die zum Starten benötigte elektrische Energie von dem Energiespeicher, der Batterie, über das Bordnetz bereitgestellt wird.

Zum Schutz der Batterie vor mechanischen Schäden wird diese oftmals in einem Bereich angeordnet, an dem die Gefahr einer Beschädigung der Batterie bei einem Unfall geringer ist, um so eine Aufrechterhaltung der Stromversorgung nach einem Unfall zu ermöglichen. Ebenso wird die Batterie zum Schutz vor thermischen Einflüssen, wie sehr niedrigen Temperaturen, häufig in einem Innenraum angeordnet oder zumindest gekapselt und thermisch isoliert eingebaut. Hierbei ist die Batterie zwar besser gegen eine Beschädigung oder vor Umwelteinflüssen geschützt, jedoch ist der Zugang zur Batterie erschwert oder sogar nur durch einen Ausbau von Fahrzeugteilen möglich. Besonders hinderlich ist diese Anordnung der Batterie, wenn aufgrund einer defekten oder entladenen Batterie eine Starthilfe erforderlich ist, bei der die Batterie der Arbeitsmaschine mit einer externen Stromversorgung, beispielsweise der Batterie einer zweiten Arbeitsmaschine, verbunden wird. Bei einer Starthilfe werden jeweils die gleichen Pole der beiden zu verbindenden Batterien miteinander verbunden, wobei üblicherweise sogenannte Starthilfekabel verwendet werden, die an jedem Ende eine Anschlussklemme zur Verbindung mit einem Pol der Batterie aufweisen.

Um eine Starthilfe oder ein Aufladen der eingebauten Batterie zu vereinfachen, ist bekannt, spezielle Starthilfepunkte beispielsweise in einem verhältnismäßig leicht zugänglichen Motorraum anzuordnen. Diese Starthilfepunkte können als elektrisch leitende Stifte oder Platten ausgeführt sein, welche ausreichend gegen Kurzschluss gesichert werden müssen. So ist beispielsweise ein einpoliger Starthilfepunkt für Kraftfahrzeuge aus der WO 2006/130071 A1 bekannt, wobei der Starthilfepunkt ohne ein Öffnen der Karosserie von außen zugänglich ist. Aus der US 2005/0070155 A1 ist ein spezielles Starthilfekabel-system bekannt, welches mehrere Zwitter-Steckverbinder umfasst. Aus der WO 2007/019924 A1 ist ein sogenannter Fremdstartstützpunkt mit einem elektrischen Anschlussteil zum Anschließen eines Starthilfe-Werkzeugs bekannt, wobei eine Isolierabdeckung mit einer Hülse in einer Ruheposition das Anschlussteil umgibt und gegen eine Federkraft in eine Freigabeposition beweglich ist, in der das Anschlussteil zur Kontaktierung frei liegt. Nachteilig ist hierbei die aufwändige und kostenintensive Konstruktion der Isolierabdeckung des elektrischen Anschlussteiles. Zudem erfordert der Anschluss einer Batterie den offenbarten Fremdstartstützpunkt weiterhin das Öffnen der Karosserie.

Es ist daher die Aufgabe der vorliegenden Erfindung ein landwirtschaftliches Fahrzeug bereitzustellen, bei dem ein vereinfachter und sicherer Anschluss mindestens eines elektrischen Energiespeichers an eine externe elektrische Stromversorgung ermöglicht wird.

Die Lösung der Aufgabe erfolgt erfindungsgemäß durch die kennzeichnenden Merkmale des Anspruches 1. Vorteilhafte Ausgestaltungen der Erfindung sind in den Unteransprüchen angegeben.

Eine landwirtschaftliche Arbeitsmaschine mit einem elektrischen Bordnetz, und mindestens einem elektrischen Energiespeicher zum abrufbaren Speichern elektrischer Energie, wobei der mindestens eine Energiespeicher elektrisch leitend mit dem Bordnetz verbunden ist. Erfindungsgemäß ist mindestens ein elektrisches Anschlussterminal zum Anschließen einer externen, elektrischen Energiequelle vorgesehen, wobei das Anschlussterminal elektrisch leitend mit dem mindestens einen Energiespeicher verbunden ist, und ein Gehäuse mit mindestens einer von außerhalb der Arbeitsmaschine zugänglichen Zugangsöffnung aufweist, welche durch ein verlagerbares Abdeckelement abdeckbar ist, wobei innerhalb des Gehäuses ein erstes Anschlusselement und ein zweites Anschlusselement zur Verbindung mit einer externen Elektrischen Energiequelle angeordnet sind.

Über ein Bordnetz einer landwirtschaftlichen Arbeitsmaschine sind im Wesentlichen alle elektrischen Verbraucher, Generatoren und Energiespeicher miteinander gekoppelt, um so deren Versorgung mit elektrischer Energie sicherzustellen. Die elektrische Energie kann durch einen mit einem Antriebsmotor gekoppelten Generator erfolgen, welcher bei laufendem Antriebsmotor elektrische Energie bereitstellt. Diese Energie wird zumindest teilweise in dem mindestens einen elektrischen Speicher, beispielsweis ein Form einer Batterie, abrufbar gespeichert, wodurch auch dann elektrische Energie bereitgestellt werden kann, wenn der Generator und/oder der Antriebsmotor nicht aktiv sind. Üblicherweise erfolgt über den Generator auch das Starten des Antriebsmotors, wobei die zum Starten benötigte elektrische Energie durch den mindestens einen Energiespeicher bereitgestellt wird. Für den Fall, dass durch den Energiespeicher nicht genügend elektrische Energie zum Starten des Antriebsmotors bereitgestellt werden kann, beispielsweise aufgrund einer zu starken Entladung oder eines Defektes, erfolgt üblicherweise eine Starthilfe durch Anschließen einer externen elektrischen Energiequelle, einer Fremdbatterie, an das Bordnetz und/oder den Energiespeicher.

Erfindungsgemäß erfolgt das Anschließen einer externen Energiequelle, beispielsweise zum Starten des Antriebsmotors, über ein Anschlussterminal der landwirtschaftlichen Arbeitsmaschine. Das Anschlussterminal ist dabei mit mindestens einem Energiespeicher und/oder dem Bordnetz der landwirtschaftlichen Arbeitsmaschine elektrisch leitend verbunden. Mehrere Energiespeicher der landwirtschaftlichen Arbeitsmaschine können beispielsweise jeweils mit einem eigenen Anschlussterminal verbunden sein. Das Anschlussterminal weist ein Gehäuse mit zwei darin angeordneten Anschlusselementen, einem ersten und einem zweiten Anschlusselement, zur Verbindung mit der externen Energiequelle auf, wobei die Anschlusselemente durch mindestens eine Zugangsöffnung des Gehäuses zum Anschließen der externen Energiequelle zugänglich sind. Möglich ist auch, dass jedem Anschlusselement eine Zugangsöffnung zugeordnet ist. Die mindestens eine Zugangsöffnung ist dabei durch ein verlagerbares Abdeckelement zum Schutz der Anschlusselemente gegen Verschmutzung und eine unbeabsichtigte Kontaktierung abdeckbar. Mehrere Zugangsöffnungen können durch ein gemeinsames Abdeckelement oder durch jeweils ein eigenes Abdeckelement abdeckbar sein. Das Anschließen der externen Energiequelle zur Starthilfe erfolgt üblicherweise mittels Starthilfekabeln, welche normalerweise für jeden anzuschließenden Pol oder Anschlussklemme ein separates Kabel zur lösbaren elektrischen Verbindung mit jeweils einem Anschlusselement des Anschlussterminals aufweisen. Diese Kabel weisen üblicherweise an jedem Ende, insbesondere zur Verbindung mit einem Anschlusselement des Anschlussterminals, Konnektoren auf, insbesondere in Form von Anschlussklemmen. Dadurch ist eine steckerfreie, insbesondere zweipolige, elektrisch leitende Verbindung mit einer externen elektrischen Energiequelle herstellbar. Das Anschlussterminal ist dabei derart mit seiner Zugangsöffnung an der landwirtschaftlichen Arbeitsmaschine angeordnet, dass die Zugangsöffnung und damit die Anschlussklemmen von außerhalb der Arbeitsmaschine, ohne Öffnen eines Karosseriebauteils der Arbeitsmaschine, zugänglich sind und gleichzeitig durch das Abdeckelement vor Verschmutzung und unbeabsichtigter Kontaktierung geschützt sind. Dadurch, dass die Anschlusselemente von außerhalb der Arbeitsmaschine, insbesondere ohne die Karosserie öffnen zu müssen, zugänglich sind, ist ein einfacher Zugang zu den Anschlusselementen und ein vereinfachtes Herstellen einer elektrischen Verbindung möglich. Zudem wird durch die Bereitstellung zweier Anschlusselemente, eines für jeden anzuschließenden elektrischen Pol, eine sichere elektrische Verbindung zwischen einer externen Energiequelle über das Anschlussterminal mit dem Energiespeicher sichergestellt.

Das Gehäuse des Anschlussterminals weist zwei elektrisch voneinander isoliert ausgebildete Ausnehmungen auf, wobei in jeder Ausnehmung ein Anschlusselement angeordnet ist. Innerhalb des Gehäuses des Anschlussterminals sind für jedes Anschlusselement, welche jeweils einem der zu verbindenden Pole des Energiespeichers zugeordnet ist, Ausnehmungen ausgebildet. Innerhalb einer Ausnehmungen ist jeweils ein Anschlusselement angeordnet. Die Ausnehmungen sind zu der Zugangsöffnung hin geöffnet und gegeneinander elektrisch isoliert, beispielsweise durch eine zwischen den Ausnehmungen ausgebildete, elektrisch isolierende Trennwand. Dies hat den Vorteil, dass beim Herstellen einer elektrischen Verbindung mit einer externen Energiequelle ein unbeabsichtigtes Kontaktieren oder Kurzschließen eines Anschlusselementes vermieden werden kann. Die Anschlusselemente sind innerhalb ihrer Ausnehmung jeweils durch die, insbesondere gemeinsame, Zugangsöffnung zum Herstellen einer elektrischen Verbindung mit einer externen Energiequelle zugänglich. Die Ausnehmungen sind durch das Abdeckelement abdeckbar, wodurch eine Verschmutzung und/oder ein unbeabsichtigtes Kontaktieren der Anschlusselemente vermieden werden kann.

Besonders bevorzugt ist das erste Anschlusselement und/oder das zweite Anschlusselement direkt mit einem Pol des mindestens einen Energiespeichers und/oder Bordnetzes elektrisch, insbesondere mittels eines Kabels, verbunden. Ein Energiespeicher der landwirtschaftlichen Arbeitsmaschine weist üblicherweise zwei elektrische Pole, einen Plus-Pol und einen Minus-Pol, auf, wobei mit jedem Pol ein Anschlusselement elektrisch leitend verbunden ist. Das erste Anschlusselement ist direkt, insbesondere mit einem elektrischen leitenden Kabel, mit dem Plus-Pol des Energiespeichers verbunden. Alternativ kann das erste Anschlusselemente direkt mit dem Plus-Pol und das zweite Anschlusselement direkt mit dem Minus-Pol elektrisch leitend, insbesondere mit einem elektrisch leitenden Kabel, verbunden sein. Die direkte elektrische Verbindung der Anschlusselemente mit den Polen des Energiespeichers ermöglicht eine verbesserte Übertragung der elektrischen Energie.

In einer bevorzugten Ausgestaltung der Erfindung ist das zweite Anschlusselement elektrisch mit einem Minus-Pol des Energiespeichers verbunden, wobei die elektrische Verbindung einen Zusatzwiderstand, insbesondere in Form eines Karosserieteils der Arbeitsmaschine, aufweist. Durch die Anordnung eines Zusatzwiderstandes in der elektrischen Verbindung des zweiten Anschlusselementes mit dem Minus-Pol des Energiespeichers kann bei einem geschlossenen Stromkreis, beispielsweise bei vollständig angeschlossenen Startkabeln mit einer externen Energiequelle, ein zu hoher Stromfluss und damit eine Beschädigung des Energiespeichers vermieden werden. Durch einen Zusatzwiderstand in Form eines Karosserieteils kann das zweite Anschlusselement beispielsweise an einem sogenannten Massepunkt der Karosserie angeschlossen sein. Dies hat den Vorteil, dass der Aufwand für die elektrische Verkabelung des Anschlussterminals verringert werden kann.

Ferner ist bevorzugt ein Schaltelement vorgesehen, durch welches bei mehreren Energiespeichern einer oder mehrere elektrisch leitend mit dem Anschlussterminal verbindbar sind. Die landwirtschaftliche Arbeitsmaschine kann ein oder mehrere Energiespeicher, beispielsweise in Form von Batterien, aufweisen. Die Energiespeicher sind, bei Bedarf, einzeln, zusammen, oder in Gruppen zusammengefasst, schaltbar elektrisch leitend mit dem Anschlussterminal verbindbar. Hierfür weist die landwirtschaftliche Arbeitsmaschine ein Schaltelement auf, durch welches die elektrische Verbindung eines oder mehrerer Energiespeicher mit dem Anschlussterminal auswählbar ist. Dies hat den Vorteil, dass beispielsweise eine nur für das Starten des Antriebsmotors vorgesehene Starterbatterie, einzeln mit dem Anschlusselement verbindbar ist, so dass die externe Energiequelle nicht überlastet wird.

Vorteilhafterweise sind die Anschlusselemente derart ausgebildet und angeordnet, jeweils einen Konnektor zur Herstellung einer elektrischen Verbindung mit der externen Energiequelle kraftschlüssig und/oder formschlüssig aufzunehmen. Der Konnektor kann dabei in Form einer Anschlussklemme ausgebildet sein und beispielsweise an einem Kabel, insbesondere Starthilfekabel, zur Herstellung einer elektrischen Verbindung zwischen der externen Energiequelle und dem Anschlussterminal bzw. den Anschlusselementen herzustellen. Ein Konnektor kann in einem angeschlossen Zustand kraftschlüssig und/oder formschlüssig mit dem jeweiligen Anschlusselement verbunden sein. Das Anschlusselement kann derart ausgebildet sein, dass durch ein Zusammenwirken mit einem Konnektor eine kraft- und/oder formschlüssige Verbindung herstellbar ist. Beispielsweise kann das Anschlusselement stabförmig mit einem im Wesentlichen runden Querschnitt oder flächig mit einem im Wesentlichen rechteckigen Querschnitt ausgebildet sein. Zudem kann die Oberfläche des Anschlusselementes eine Profilierung aufweisen, beispielsweise in Form von Nuten oder einem Außengewinde, wodurch die Gefahr eines unbeabsichtigten Lösens des Konnektors, beispielsweise durch Abrutschen, verringert werden kann. Ebenso ist es denkbar, dass das Anschlusselement eine Geometrie aufweist, welche derart mir der Form des Konnektors zusammenwirkt, dass eine zumindest formschlüssige Verbindung herstellbar ist. Diese hat den Vorteil, dass beispielsweise bei auftretende und auf die Verbindung wirkenden Vibrationen durch die zumindest formschlüssige Verbindung ein lösen der Verbindung vermieden werden kann.

In einer bevorzugten Ausgestaltung der Erfindung sind die Anschlusselemente derart ausgebildet und angeordnet, dass diese zumindest teilweise in die jeweilige Ausnehmung hineinragen. Die Ausnehmungen weisen jeweils Wände, insbesondere eine Oberseite, Unterseite und Seitenwände, auf, welche die Ausnehmung begrenzen. Die Ausnehmung ist dabei zur Zugangsöffnung hin geöffnet, beispielsweise durch eine Öffnung in einer der Wände. Die Anschlusselemente ragen aus zumindest einer der Wände heraus und in die Ausnehmung hinein. Die Anschlusselemente können dabei an einer Wand gelagert sein und dabei beispielsweise wie ein einseitig gelagerter Kragarm in die Ausnehmung hineinragen. Alternativ können die Anschlusselemente mehrfach gelagert sein, beispielsweise in derselben Wand oder in zwei Wänden. Dabei kann das Anschlusselement beispielsweise bügelförmig ausgebildet sein. Dies ermöglicht eine besonders vorteilhafte Anordnung und Ausgestaltung der Anschlusselemente zur Herstellung einer zuverlässigen Verbindung mit den Konnektoren.

Die Anschlusselemente sind jeweils in zwei gegenüberliegend angeordneten Wänden der Ausnehmungen gelagert und diese verbindend ausgebildet und angeordnet. Die Anschlusselemente können jeweils in der Oberseite und der Unterseite oder in zwei gegenüberliegenden Seitenwänden gelagert sein. Die Anschlusselemente können dabei im Wesentlichen senkrecht oder waagerecht innerhalb der Ausnehmung angeordnet sein. Eine im Wesentlichen senkrechte oder waagerechte Anordnung der Anschlusselemente hat den Vorteil, dass beispielsweise bei einer stabförmigen Ausgestaltung der Anschlusselemente, ein daran angeschlossener Konnektor um eine Längsachse des jeweiligen Anschlusselementes verdrehbar ist, so dass je nach Anordnung des Anschlussterminal und der Anschlusselemente eine optimale Anordnung der Konnektoren ermöglicht werden kann.

In einer besonders bevorzugten Ausgestaltung der Erfindung ist das Abdeckelement in Form eines selbsttätig schließenden Abdeckelementes ausgebildet. Das Abdeckelement kann in einem montierten, insbesondere geschlossenen, Zustand derart ausgebildet und angeordnet sein, dass das Abdeckelement außenseitig oberflächenbündig dem Formverlauf der Karosserie der landwirtschaftlichen Arbeitsmaschine folgend ausgebildet ist. Das selbsttätig schließende Abdeckelement ist beispielsweise mit einer Federkraft beaufschlag-bar, welche das Abdeckelement nach einem Öffnen wieder in eine geschlossene Position zurückführt. Dies hat den Vorteil, dass die durch das Abdeckelement abdeckbare Zugangsöffnung auch bei einer hergestellten Verbindung nur so weit wie nötig geöffnet ist, so dass weniger Schmutz in an die Anschlusselemen te gelangen kann und eine unbeabsichtigte Kontaktierung der Anschlusselemente und/oder Konnektoren vermieden werden kann.

Besonders bevorzugt ist das Abdeckelement in sich elastisch verformbar. Das Abdeckelement kann beispielsweise in Form einer elastischen Kunststoffplatte ausgebildet sein, welche durch Hochbiegen in sich elastisch verformbar ist, so dass die Zugangsöffnung zugänglich ist. Das Abdeckelement kann einstückig mit dem Anschlussterminal oder einer Wand einer Ausnehmung ausgebildet sein oder stoffschlüssig, beispielsweise durch Kleben, mit dem Anschlussterminal verbunden sein. Nach einem Loslassen des Abdeckelementes erfolgt eine Rück-Verformung in den ursprünglichen Zustand, in dem die Zugangsöffnung abgedeckt ist. Bei angeschlossenen Konnektoren kann ein Rück-Verformen bzw. Schließen des Abdeckelementes bis zu einer Kontaktierung der Konnektoren oder den daran angeschlossenen Kabeln erfolgen. Das in sich elastisch verformbare Abdeckelement hat den Vorteil, dass es kostengünstig herstellbar ist.

In einer weiter bevorzugten Ausgestaltung der Erfindung weist die Arbeitsmaschine ein, insbesondere seitlich an der Arbeitsmaschine angeordnetes, Bauteil mit einer Aussparung zur Aufnahme außenseitigen des Anschlussterminals auf. Das Bauteil zur Aufnahme des Anschlussterminals ist in Fahrtrichtung seitlich an der Arbeitsmaschine angeordnet, was den Vorteil hat, dass es vor Beschädigung und Verschmutzung geschützt ist und gleichzeitig durch die außenseitige Anordnung direkt, ohne Karosseriebauteile wie eine Motorhaube öffnen zu müssen, zugänglich ist. Das Anschlussterminal kann im Wesentlichen oberflächenbündig in dem Bauteil angeordnet sein. Das Bauteil kann beispielsweise auch einen Flüssigkeitstank, insbesondere einen Kraftstofftank, umfassen. Durch die außenseitige Integration des Anschlussterminals in ein Bauteil kann eine geschützte Anordnung und eine gute Zugänglichkeit des Anschlussterminals ermöglicht werden.

Nachfolgend wird die Erfindung unter Bezugnahme auf die anliegende Zeichnung näher erläutert.

Es zeigen:
- Fig. 1:: eine schematische Seitenansicht eines landwirtschaftlichen Fahrzeuges mit einem erfindungsgemäßen Anschlussterminal;
- Fig. 2:: eine schematisch perspektivische Ansicht eines Anschlussterminals;
- Fig. 3:: eine schematisch perspektivische Ansicht des in Fig. 2 gezeigten Anschlussterminals mit darin angeordneten Anschlusselementen;
- Fig. 4:: eine schematisch perspektivische Ansicht eines Anschlusselementes mit geöffnetem Abdeckelement; und
- Fig. 5:: eine Draufsicht auf das in Fig. 4 gezeigte Anschlusselement.

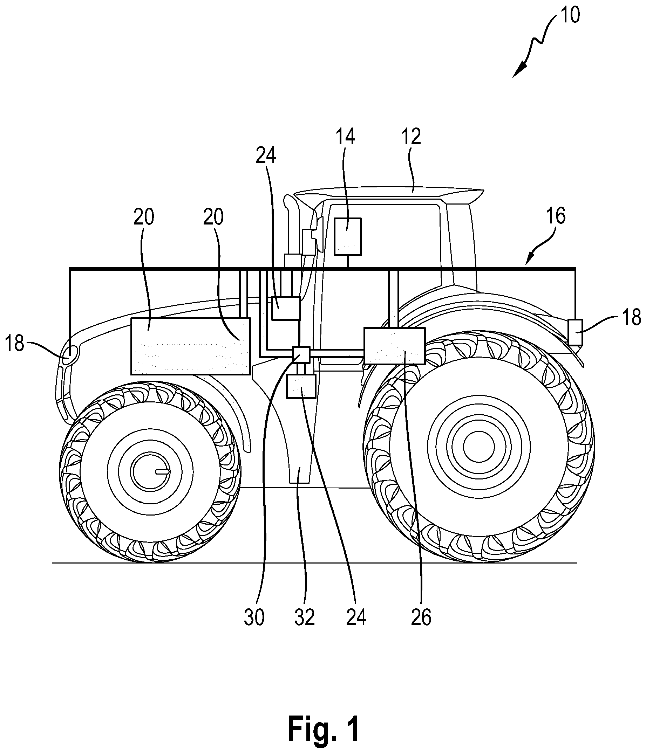

In Figur 1 ist eine landwirtschaftliche Arbeitsmaschine 10 in Form eines Traktors schematisch von der Seite dargestellt, wobei der grundsätzliche Aufbau eines Traktors als dem Fachmann bekannt angesehen wird. Eine landwirtschaftliche Arbeitsmaschine 10 im Sinne der Erfindung kann jedes zur landwirtschaftlichen Arbeit einsetzbare Fahrzeug sein, beispielsweise ein Traktor, ein Frontlader, eine Baumaschine, oder eine selbstfahrende Erntemaschine wie ein Mähdrescher oder ein Feldhäcksler. Der Traktor weist zur Aufnahme eines Bedieners eine geschlossene Fahrerkabine 12 auf, wobei innerhalb der Fahrerkabine 12 üblicherweise Anzeige- und Bedienelemente 14 zur Bedienung der landwirtschaftlichen Arbeitsmaschine 10 angeordnet sind.

Die landwirtschaftliche Arbeitsmaschine 10 kann eine Vielzahl von elektrische Verbraucher aufweisen, wie Sensoren und Aktoren, die über ein elektrisches Bordnetz 16 mit Energie versorgt werden und über dieses gesteuert und geregelt werden können. Über das, in Fig. 1 stark vereinfacht dargestellte, Bordnetz 16 werden beispielsweise die Anzeige- und Bedienelemente 14 und die Fahrzeugbeleuchtung 18 der landwirtschaftlichen Arbeitsmaschine 10 mit elektrischer Energie versorgt. Die elektrische Energie kann durch einen Antriebsmotor 20 bereitgestellt werden, welcher mit einem Starter-Generator 22 gekoppelt ist, der dabei als Generator betrieben wird und an das Bordnetz 16 angeschlossen ist, so dass elektrische Energie in das Bordnetz 16 eingespeist werden kann. Zur abrufbaren Speicherung der elektrischen Energie weist die landwirtschaftliche Arbeitsmaschine 10 mindestens einen ersten, ebenfalls mit dem Bordnetz 16 verbundenen, Energiespeicher 24 auf, wobei der erste Energiespeicher 24 beispielsweise in Form einer Batterie ausgebildet sein kann. Neben dem ersten Energiespeicher 24 weist die Arbeitsmaschine 10 noch einen zweiten Energiespeicher 26 auf, welcher ebenfalls an das Bordnetz 16 angeschlossen ist und als Batterie ausgebildet ist. Unter einem Energiespeicher 24, 26 im Sinne der Erfindung ist auch jede andere, zur abrufbaren Speicherung elektrischer Energie geeignete Vorrichtung zu verstehen. Dies kann beispielsweise auch eine Brennstoffzelle oder ein Schwungrad sein. Weist die landwirtschaftliche Arbeitsmaschine 10 mehrere Energiespeicher 24, 26 auf, so kann einer der Energiespeicher 24, 26 als sogenannte Starterbatterie verwendet werden, welche die elektrische Energie zum Starten des Antriebsmotors 20 durch den Starter-Generator 22 bereitstellt.

Erfindungsgemäß weist die landwirtschaftliche Arbeitsmaschine 10 ein Anschlussterminal 28 auf, welches mit mindestens einem Energiespeicher 24, 26 und/oder dem Bordnetz 16 verbunden ist. Über das Anschlussterminal 16 kann eine lösbare elektrische Verbindung mit einer externen Energiequelle (nicht dargestellt) hergestellt werden. Dies kann beispielsweise erfolgen, wenn die in den Energiespeichern 24, 26 der Arbeitsmaschine 10 gespeicherte elektrische Energie nicht zum Starten des Antriebsmotors 20 ausreicht. Im Sinne der Erfindung kann eine externe Energiequelle beispielsweise eine Fremdbatterie oder ein Bordnetz einer anderen Arbeitsmaschine sein, welche elektrische Energie an die Arbeitsmaschine 10 abgibt oder von dieser abnimmt, beispielsweise wenn mit der Arbeitsmaschine 10 einer anderen Maschine oder Fahrzeug Starthilfe gegeben wird. Das Anschlussterminal 28 ist über ein Schaltelement 30 auswählbar schaltbar elektrisch leitend mit dem ersten Energiespeicher 24, dem zweiten Energiespeicher 26 und/oder dem Bordnetz 16 verbunden. Das Schaltelement 30 kann beispielsweise in Form eines Drehschalters oder Tasters ausgebildet sein. Dadurch können ein einzelner Energiespeicher 24, 26, in Form einer Starterbatterie, oder beide Energiespeicher 24, 26 gleichzeitig geladen werden. Außerdem kann die elektrische Energie der externen Energiequelle direkt in das Bordnetz 16 eingespeist werden, beispielsweise um Funktionstest durchzuführen, wenn noch kein Energiespeicher 24, 26 angeschlossen ist und der Antriebsmotor 20 nicht in Betrieb ist.

Das Anschlussterminal 28 ist in Fahrtrichtung der landwirtschaftlichen Arbeitsmaschine 10 gesehen seitlich angeordnet, wodurch das Anschlussterminal 28 vor einer Verschmutzung und Beschädigung weitestgehend geschützt ist. Zudem ist das Anschlussterminal 28 von außerhalb der Arbeitsmaschine 10 direkt, ohne ein Karosserieteil wie eine Motorhaube öffnen zu müssen, zugänglich. Das Anschlusselement 28 ist dabei außenseitig in einem Bauteil 32 der Arbeitsmaschine 10 angeordnet. Das Bauteil 32 kann beispielsweise einen Flüssigkeitstank, beispielsweise für Kraftstoff, umfassen und ist ebenfalls seitlich an der Arbeitsmaschine 10 angeordnet.

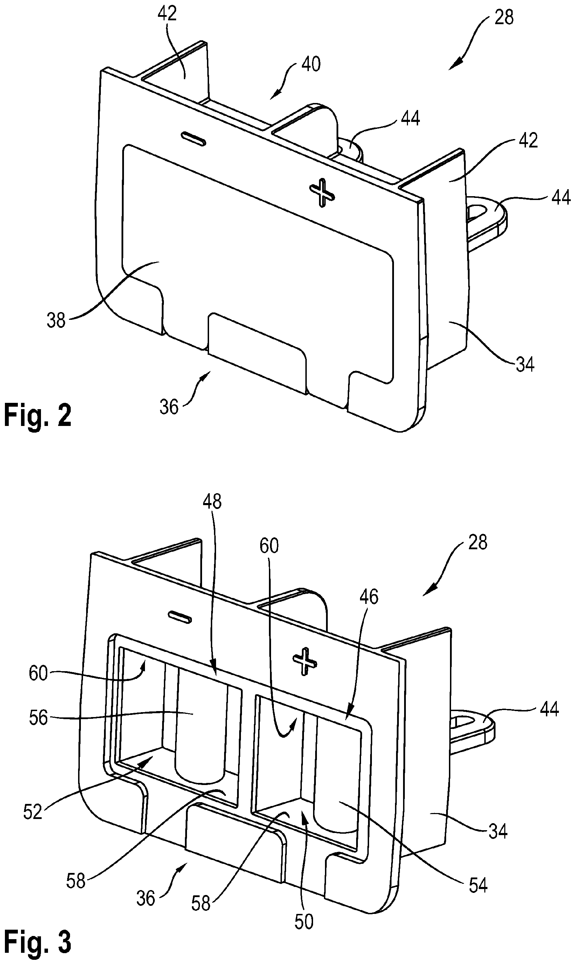

In Fig. 2 ist das Anschlussterminal 28 in einer geschlossenen Position dargestellt. Ein Gehäuse 34 des Anschlussterminals 28, welches insbesondere zum Einbau in ein Bauteil 32 ausgebildet ist, weist eine in einem montierten Zustand des Anschlussterminals 28 von außerhalb der Arbeitsmaschine 10 zugängliche Außenseite 36 auf. Innerhalb der Außenseite 36 ist ein Abdeckelement 38 in einer geschlossenen Position angeordnet, welches mindestens eine (nicht dargestellte) Zugangsöffnung zur Innenseite des Anschlussterminals 28 abdeckt. Das Abdeckelement 38 ist dabei in dem geschlossenen Zustand oberflächenbündig in der Außenseite 36 angeordnet. Auf einer der Außenseite 36 gegenüberliegenden Rückseite 40, welche in einem montierten Zustand des Anschlussterminals 28 innerhalb des Bauteils 32 angeordnet ist, weist das Anschlussterminal 28 neben Verstärkungsrippen 42 Befestigungslaschen 44 zur Befestigung an dem Bauteil 32 auf.

In Fig. 3 ist das Anschlussterminal 28 ohne das Abdeckelement 38 dargestellt. In der Außenseite 36 sind eine erste Zugangsöffnung 46 und eine zweite Zugangsöffnung 48 nebeneinander angeordnet. Die Zugangsöffnungen 46, 48 ermöglichen jeweils den Zugang zu einer ersten Ausnehmung 50 und einer zweiten Ausnehmung 52, welche innerhalb des Gehäuses 34 des Anschlussterminals 28 ausgebildet sind. Innerhalb der ersten Ausnehmung 50 ist dabei eine erstes Anschlusselement 54 angeordnet und innerhalb der zweiten Ausnehmung 52 ein zweites Anschlusselement 56. Das erste Anschlusselement 54 und das zweite Anschlusselement 56 sind elektrisch leitend mit dem ersten Energiespeicher 24, dem zweiten Energiespeicher 26 und/oder dem Bordnetz 16 verbunden, beispielsweise schaltbar über das Schaltelement 30. Die Anschlusselemente 54, 56 sind in Form von zylindrischen Stäben ausgebildet, welche jeweils im Wesentlichen senkrecht zwischen einer Unterseite 58 und einer Oberseite 60 innerhalb ihrer jeweiligen Ausnehmung 50, 52 angeordnet sind. Das erste Anschlusselement 54 ist dabei einem Plus-Pol eines Energiespeichers 24, 26 und/oder des Bordnetzes 16 zugeordnet und das zweite Anaschlusselement 56 einem Minus-Pol eines Energiespeichers 24, 26 und/oder des Bordnetzes 16. Der Plus-Pol weist dabei ein elektrisches Potential gegenüber der Masse auf, wohingegen der Minus-Pol kein Potential gegenüber der Masse aufweist. An die Anschlusselemente 54, 56 kann eine externe Energiequelle, beispielsweise mittels Konnektoren (nicht dargestellt) in Form von Anschlussklemm, angeschlossen werden. Vorteilhaft ist hierbei, dass durch die Anordnung der Anschlusselemente 54, 56 jeweils innerhalb einer Ausnehmung 50, 52 in dem Anschlussterminal 28 ein unbeabsichtigtes Kontaktieren des Anschlusselemente 54, 56 vermieden werden kann, da die Ausnehmungen 50, 52 von einander elektrisch isolierend getrennt sind.

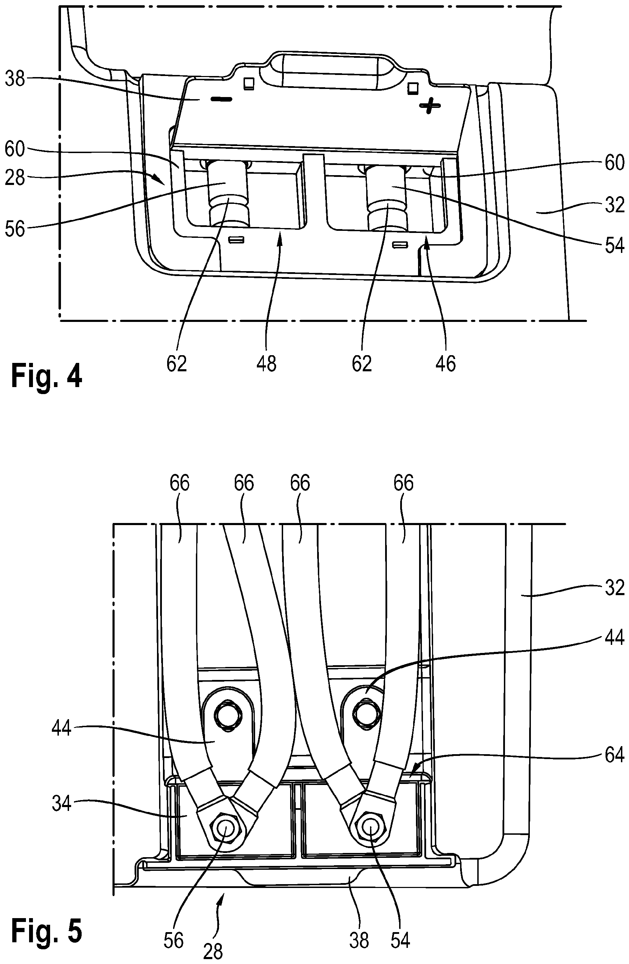

Die erste und zweite Zugangsöffnung 46, 48 sind gemeinsam durch das Abdeckelement (Fig. 4) verschließbar. Um einen verbesserten Halt der angeschlossenen Konnektoren an den Anschlusselementen 54, 56 zu ermöglichen, weisen das erste und das zweite Anschlusselement 54, 56 jeweils radial außenseitig eine Profilierung 62 in Form umlaufender Nuten auf, in welche beispielsweise ein Konnektor in Form einer Anschlussklemme eingreifen kann. In Fig. 5 ist das Anschlussterminal 28 in einem montierten Zustand in einer Draufsicht dargestellt. Das Anschlussterminal 28 ist mit seinem Gehäuse 34 in dem Bauteil 32 innerhalb einer Aussparung 64 angeordnet und über die Befestigungslaschen 44 lösbar mit diesem verbunden. Das Abdeckelement 38 ist in einem geschlossenen Zustand und deckt die erste und zweite Ausnehmung (nicht dargestellt) mit den darin angeordneten ersten und zweiten Anschlusselementen 54, 56 ab. Das erste Anschlusselement 54 und das zweite Anschlusselement 56 sind jeweils zumindest oberseitig aus dem Gehäuse 34 herausgeführt und lösbar über Kabel 66 mit dem Schaltelement 30, dem ersten Energiespeicher 24, dem zweiten Energiespeicher 26 und/oder dem Bordnetz 16 elektrisch leitend verbunden.

### Bezugszeichenliste

- 10: landwirtschaftliche Arbeitsmaschine
- 12: Fahrerkabine
- 14: Anzeige- und Bedienelement
- 16: Bordnetz
- 18: Fahrzeugbeleuchtung
- 20: Antriebsmotor
- 22: Starter-Generator
- 24: erster Energiespeicher
- 26: zweiter Energiespeicher
- 28: Anschlussterminal
- 30: Schaltelement
- 32: Bauteil
- 34: Gehäuse
- 36: Außenseite
- 38: Abdeckelement
- 40: Rückseite
- 42: Verstärkungsrippen
- 44: Befestigungslaschen
- 46: erste Zugangsöffnung
- 48: zweite Zugangsöffnung
- 50: erste Ausnehmung
- 52: zweite Ausnehmung
- 54: erstes Anschlusselement
- 56: zweites Anschlusselement
- 58: Unterseite
- 60: Oberseite
- 62: Profilierung
- 64: Aussparung
- 66: Kabel

## Patentansprüche

1. Landwirtschaftliche Arbeitsmaschine mit einem elektrischen Bordnetz (16), und mindestens einem Energiespeicher (24, 26) zum abrufbaren Speichern elektrischer Energie, wobei der mindestens eine Energiespeicher (24, 26) elektrisch leitend mit dem Bordnetz (16) verbunden ist,
mindestens ein elektrisches Anschlussterminal (28) zum Anschließen einer externen, elektrischen Energiequelle vorgesehen ist, wobei das Anschlussterminal (28) elektrisch leitend mit dem mindestens einen Energiespeicher (24, 26) verbunden ist, und ein Gehäuse (34) mit mindestens einer von außerhalb der Arbeitsmaschine (10) zugänglichen Zugangsöffnung (46, 48) aufweist, welche durch ein verlagerbares Abdeckelement (38) abdeckbar ist, **dadurch gekennzeichnet, dass** innerhalb des Gehäuses (34) ein erstes Anschlusselement (54) und ein zweites Anschlusselement (56) zur Verbindung mit der externen elektrischen Energiequelle angeordnet sind, wobei das Gehäuse (34) des Anschlussterminals (28) zwei elektrisch voneinander isoliert ausgebildete Ausnehmungen (50, 52) aufweist, wobei in jeder Ausnehmung (50, 52) ein Anschlusselement (54, 56) angeordnet ist, wobei die Anschlusselemente (54, 56) jeweils in zwei gegenüberliegend angeordneten Wänden der Ausnehmungen (50, 52) gelagert und diese verbindend ausgebildet und angeordnet sind.

2. Arbeitsmaschine nach Anspruch 1, **dadurch gekennzeichnet, dass** das erste Anschlusselement (54) und/oder das zweite Anschlusselement (56) direkt mit einem Pol des mindestens einen Energiespeichers (24, 26) und/oder Bordnetzes (16) elektrisch, insbesondere mittels eines Kabels (66), verbunden ist.

3. Arbeitsmaschine nach Anspruch 1 oder 2, **dadurch gekennzeichnet, dass** das zweite Anschlusselement elektrisch mit einem Minus-Pol des Energiespeichers verbunden ist, wobei die elektrische Verbindung einen Zusatzwiderstand, insbesondere in Form eines Karosserieteils der Arbeitsmaschine, aufweist.

4. Arbeitsmaschine nach einem der vorherigen Ansprüche, **dadurch gekennzeichnet, dass** ein Schaltelement (30) vorgesehen ist, durch welches bei mehreren Energiespeichern (24, 26) einer oder mehrere elektrisch leitend mit dem Anschlussterminal (28) verbindbar sind.

5. Arbeitsmaschine nach einem der vorherigen Ansprüche, **dadurch gekennzeichnet, dass** die Anschlusselemente (54, 56) derart ausgebildet und angeordnet sind, jeweils einen Konnektor zur Herstellung einer elektrischen Verbindung mit der externen Energiequelle kraftschlüssig und/oder formschlüssig aufzunehmen.

6. Arbeitsmaschine nach einem der vorherigen Ansprüche, **dadurch gekennzeichnet, dass** die Anschlusselemente (54, 56) derart ausgebildet und angeordnet sind, dass diese zumindest teilweise in die jeweilige Ausnehmung (50, 52) hineinragen.

7. Arbeitsmaschine nach einem der vorherigen Ansprüche, **dadurch gekennzeichnet, dass** das Abdeckelement (38) in Form eines selbsttätig schließenden Abdeckelementes (38) ausgebildet ist.

8. Arbeitsmaschine nach einem der vorherigen Ansprüche, **dadurch gekennzeichnet, dass** das Abdeckelement (38) in sich elastisch verformbar ist.

9. Arbeitsmaschine nach einem der vorherigen Ansprüche, **dadurch gekennzeichnet, dass** die Arbeitsmaschine (10) ein, insbesondere seitlich an der Arbeitsmaschine (10) angeordnetes, Bauteil (32) mit einer Aussparung (64) zur außenseitigen Aufnahme des Anschlussterminals (28) aufweist.

## Claims

1. Agricultural machine with an electrical vehicle power supply (16), and at least one energy store (24, 26) for the retrievable storage of electrical energy, wherein the at least one energy store (24, 26) is connected to the vehicle power supply (16) in an electrically conducting manner,
at least one electrical connection terminal (28) is provided for connecting an external, electrical energy source, wherein the connection terminal (28) is connected to the at least one energy store (24, 26) in an electrically conducting manner, and has a housing (34) with at least one access opening (46, 48) accessible from outside the machine (10), which can be covered by a displaceable covering element (38), **characterized in that** a first connection element (54) and a second connection element (56) for connection to the external electrical energy source are arranged inside the housing (34), wherein the housing (34) of the connection terminal (28) has two recesses (50, 52) formed electrically isolated from each other, wherein one connection element (54, 56) is arranged in each recess (50, 52), wherein the connection elements (54, 56) are each mounted in two walls of the recesses (50, 52) arranged opposite and are formed and arranged connecting the latter.

2. Machine according to claim 1, **characterized in that** the first connection element (54) and/or the second connection element (56) is electrically connected directly to one terminal of the at least one energy store (24, 26) and/or vehicle power supply (16), in particular by means of a cable (66).

3. Machine according to claim 1 or 2, **characterized in that** the second connection element is electrically connected to a negative terminal of the energy store, wherein the electrical connection has an additional resistance, in particular in the form of a body part of the machine.

4. Machine according to one of the previous claims, **characterized in that** a switching element (30) is provided, through which, in the case of several energy stores (24, 26), one or more can be connected to the connection terminal (28) in an electrically conducting manner.

5. Machine according to one of the previous claims, **characterized in that** the connection elements (54, 56) are formed and arranged so as in each case to receive, non-positively and/or positively fitting, a connector to produce an electrical connection to the external energy source.

6. Machine according to one of the previous claims, **characterized in that** the connection elements (54, 56) are formed and arranged such that they at least partially protrude into the respective recess (50, 52).

7. Machine according to one of the previous claims, **characterized in that** the covering element (38) is made in the form of a self-closing covering element (38).

8. Machine according to one of the previous claims, **characterized in that** the covering element (38) is elastically deformable per se.

9. Machine according to one of the previous claims, **characterized in that** the machine (10) has a component (32), arranged in particular on the side of the machine (10), with a cut-out (64) for receiving the connection terminal (28) externally.

## Revendications

1. Machine de travail agricole comprenant un réseau électrique de bord (16) et au moins un accumulateur d'énergie (24, 26) pour accumuler de manière disponible de l'énergie électrique, le au moins un accumulateur d'énergie (24, 26) étant relié au réseau de bord (16) de manière électriquement conductrice, au moins un terminal de connexion électrique (28) étant prévu pour connecter une source d'énergie électrique externe, le terminal de connexion (28) étant relié de manière électriquement conductrice au au moins un accumulateur d'énergie (24, 26) et comportant un boîtier (34) avec au moins une ouverture d'accès (46, 48) qui est accessible de l'extérieur de la machine de travail (10) et qui est recouvrable par l'intermédiaire d'un élément de recouvrement mobile (38), **caractérisée en ce qu'**à l'intérieur du boîtier (34) est disposé un premier élément de connexion (54) et un second élément de connexion (56) aptes à être reliés à la source d'énergie électrique externe, le boîtier (34) du terminal de connexion (28) étant pourvu de deux cavités (50, 52) isolées électriquement l'une de l'autre, dans chaque cavité (50, 52) étant disposé un élément de connexion (54, 56), les éléments de connexion (54, 56) étant logés chacun dans deux parois en vis-à-vis des cavités (50, 52) et étant conçus et agencés pour relier celles-ci.

2. Machine de travail selon la revendication 1, **caractérisée en ce que** le premier élément de connexion (54) et/ou le second élément de connexion (56) est relié directement à un pôle du au moins un accumulateur d'énergie (24, 26) et/ou du réseau de bord (16) de manière électrique, en particulier au moyen d'un câble (66).

3. Machine de travail selon la revendication 1 ou 2, **caractérisée en ce que** le second élément de connexion est relié électriquement à un pôle négatif de l'accumulateur d'énergie, la liaison électrique présentant une résistance supplémentaire, en particulier en forme d'élément de carrosserie de la machine de travail.

4. Machine de travail selon une des revendications précédentes, **caractérisée en ce qu'**il est prévu un élément de commutation (30) permettant, en présence de plusieurs accumulateurs d'énergie (24, 26), d'en relier de manière électriquement conductrice un ou plusieurs au terminal de connexion (28).

5. Machine de travail selon une des revendications précédentes, **caractérisée en ce que** les éléments de connexion (54, 56) sont conçus et agencés de façon à recevoir chacun, par complémentarité de forces et/ou par complémentarité de formes, un connecteur pour établir une liaison électrique avec la source d'énergie extérieure.

6. Machine de travail selon une des revendications précédentes, **caractérisée en ce que** les éléments de connexion (54, 56) sont conçus et agencés de façon à pénétrer au moins en partie dans la cavité correspondante (50, 52).

7. Machine de travail selon une des revendications précédentes, **caractérisée en ce que** l'élément de recouvrement (38) est conçu en forme d'élément de recouvrement (38) apte à se fermer de lui-même.

8. Machine de travail selon une des revendications précédentes, **caractérisée en ce que** l'élément de recouvrement (38) est en soi déformable élastiquement.

9. Machine de travail selon une des revendications précédentes, **caractérisée en ce que** la machine de travail (10) comporte un élément structurel (32), en particulier disposé latéralement sur la machine de travail (10), pourvu d'un évidement (64) pour recevoir extérieurement le terminal de connexion (28).
